Europäisches Patentamt

**European Patent Office**

**Office européen des brevets**

(11) Publication number: **0 423 983 A2**

## EUROPEAN PATENT APPLICATION

(21) Application number: 90310912.2

(51) Int. Cl.[5]: **G06F 15/60**

(22) Date of filing: 04.10.90

(30) Priority: 18.10.89 US 423274

(43) Date of publication of application:
24.04.91 Bulletin 91/17

(84) Designated Contracting States:
CH DE ES FR GB GR IT LI SE

(71) Applicant: **HUGHES AIRCRAFT COMPANY**
**7200 Hughes Terrace**
**Los Angeles, CA 90045-0066(US)**

(72) Inventor: **Hopkins, Ronald N.**
**3542 North Olive Road**
**Tucson, Arizona 85719(US)**

(74) Representative: **Colgan, Stephen James et al**
**CARPMAELS & RANSFORD 43 Bloomsbury**
**Square**
**London WC1A 2RA(GB)**

(54) Apparatus for and method of modeling spool windings.

(57) An apparatus and method including the use of a computer 108 and finite element analysis to predict certain mechanical characteristics and displacements of cable 10 wound around a spool 12. Stepback regions 38, 40 of the cable 10 are considered as well as a conical shape for the spool 12, an orthotropic spool material, and uniform temperature changes in the spool 12 and cable 10.

COLLECT INPUT DATA SUCH AS SPOOL AND CABLE DIMENSIONS AND MATERIAL PROPERTIES — 60

CHECK FOR LEGITIMATE SPOOL CONFIG. — 62

CHECK FOR SUFFICIENT STORAGE SPACE — 64

GENERATE NODES FOR SPOOL AND FIRST LAYER OF CABLE TURNS — 66

GENERATE ELEMENTS FOR SPOOL, BUFFER, AND GLASS CABLE — 68

GENERATE LOAD VECTOR BASED ON WINDING TENSIONS $\{F\}^e$ = TENSION/RADIUS — 70

GENERATE LOCAL STIFFNESS FOR EACH ELEMENT AND STORE IN GLOBAL STIFFNESS MATRIX $[K]^e = \int [B]^T [D][B]\, dv$ — 72

Ⓐ

_FIG-5A_

Ⓑ

SOLVE FOR DISPLACEMENTS BASED ON TOTAL GLOBAL STIFFNESS MATRIX & THERMAL LOADS — 102

CALCULATE SPOOL STRESS AND BUFFER AND GLASS REACTION FORCES, AGAIN ADDITIVE TO WINDING LOADS — 104

CALCULATE NEW RESIDUAL CABLE TENSIONS. RES. TENSION = TENSION + $\{F\}^e$ r — 106

STOP

_FIG-5C_

EP 0 423 983 A2

EP 0 423 983 A2

(A)

| SOLVE FOR ALL NODAL DISPLACEMENTS $\{X\} = [K]^{-1}\{f\}$ | 74 |

| CALCULATE SPOOL STRESSES AND BUFFER LOADS FROM KNOWN DISPLACEMENTS $\{\sigma\}^e = [D][B]\{X\}^e$ $\{F\}^e = [K]^e\{S\}^e$ | 76 |

| LAYERS = LAYERS + 1 | 78 |

GENERATE NODES FOR NEXT LAYER OF CABLE — 80

GENERATE BUFFER AND GLASS CABLE ELEMENTS FOR NEXT LAYER OF CABLE — 82

GENERATE A NEW LOAD VECTOR BASED ONLY ON NEXT LAYER WINDING TENSION — 84

GENERATE LOCAL STIFFNESS MATRIX FOR EACH ELEMENT AND STORE IN GLOBAL STIFFNESS MATRIX. (IT IS ADDED TO THE PREVIOUS GLOBAL STIFFFNESS MATRIX) — 86

SOLVE FOR ALL NODAL DISPLACEMENTS — 88

CALCULATE SPOOL STRESSES AND BUFFER AND GLASS LOADS. THESE ARE ADDITIVE FROM LAYER TO LAYER — 90

CALCULATE RESIDUAL CABLE TENSIONS — 92

LAYERS= LAYERS + 1 — 94    _FIG-5B_

YES    IS LAYERS < TOTAL LAYERS ? — 96

98

NO

CALCULATE THERMAL LOAD VECTOR BASED ON ELEMENTAL STIFFNESS MATRICES $\{f\}^e = \int_V [B]^T [D]\{\epsilon\} \, d\forall$ — 100

(B)

2

# APPARATUS FOR AND METHOD OF MODELING SPOOL WINDINGS

## BACKGROUND OF THE INVENTION

### 1. Field of the Invention

The present invention generally relates to the use of a computer program to predict the behavior of spool windings and, more particularly, is concerned with a finite element model for predicting the residual tensions, interface loads, and displacements for layers of cable precision wound on a spool.

### 2. Discussion

Winding any elongated article around an object, such as a spool, induces deformations, stresses, and strains in the spool and elongated article. There are various and sundry reasons for desiring to wind the elongated article, such as cable, in a tight manner. Being able to predict the necessary stiffness for the cable and spool by computer assisted means, is preferable to a trial and error approach.

Although many features and advantages of the present invention can be used for spool windings of many types and varieties, it is extremely useful with respect to modern weapon systems utilizing a launched missile in which guidance information is transferred between the missile and a firing platform via a fiber optic cable. To provide adequate range for the missile, it is necessary to store a very long length of fiber optic cable within the missile. Typically, a winding is provided on a spool which pays out cable at an extremely high rate as the missile is propelled toward its target. A cable which is precision wound around a spool is typically called a cablepack.

A number of parameters must be considered in designing a winding for a cablepack. For efficient packaging, it is desirable to provide a winding which is dense and compact. The winding should also be structurally stable to enable it to retain its configuration during storage, handling, and dispensing.

A cablepack model, based on finite element techniques, can be useful in the design of cablepacks. For example, a cablepack model was developed by Dr. P.M. Riplog, to analyze cablepack behavior. However, Riplog's model treated the cablepack as a continuum and analyzed only the axially uniform region of the cablepack. In addition, previous models failed to address the layer-to-layer transition region at the ends of a spool. Nor did previous models account for the effects of a conical spool.

## SUMMARY OF THE INVENTION

The objective of the present invention is to provide an improved model for predicting certain mechanical characteristics and displacements of cable wound around a spool. This model not only predicts a cablepack's response in the axially uniform region of a cablepack but it also predicts the response in the layer-to-layer end transition region of a cablepack, also known as the stepback region. In addition, this invention accounts for the effects of a conical spool, an anisotropic spool material, and a uniform temperature change in the cablepack. The model uses ring theory and thin shell theory to model the necessary stiffness of the cable and spool respectively. The layer-to-layer transition regions and stepbacks are described later in the Detailed Description of the Invention and in the drawings.

The invention makes use of a computer to input first data pertaining to known parameters of the cable and spool. Then, second data is input which models the stepback regions of the cablepack. The first and second data are stored in the computer. Then, the interrelationships or equations are defined, and used by the computer to calculate predicted physical responses of the cable and spool.

## BRIEF DESCRIPTION OF THE DRAWINGS

FIG. 1 is a perspective view of a precision wound cablepack showing the cable unwinding from the spool and having one end of the cable connected to a control anchor point or station;

FIG. 2 is a partial cross-sectional view of the layer-to-layer end transitions or stepbacks of a cablepack;

FIG. 3 is a partial plan view of a cablepack showing the layer-to-layer end transition region or stepbacks of cable;

FIG. 4 is a partial finite element model of the layer-to-layer end transition region or stepbacks of a cablepack and is slightly inclined to reflect a conical shaped spool;

FIG. 5 A, B, C is a flowchart of the finite element program to operate the computer of the subject invention; and

FIG. 6 is a diagram of a representative computer hardware system of the type which may be used for the subject invention.

## DETAILED DESCRIPTION OF THE INVENTION

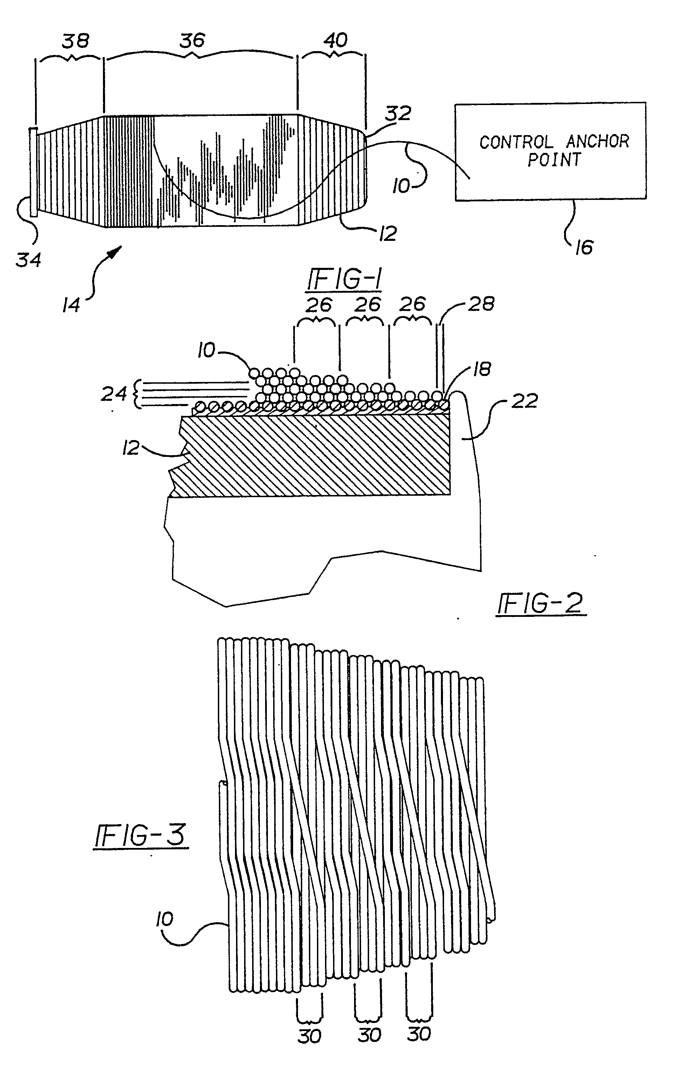

Referring to FIG. 1, a cable 10 precision wound around a spool 12, also known as a cablepack 14, is shown. A cablepack 14 such as the one shown, is particularly adapted to enable high speed payout of cable 10 (e.g., glass fiber optic filament) usable in connection with guided missile systems. One end of the cable 10 is attached to a control anchor point 16 from which signals may be sent through the cable 10 to a missile (not shown) upon which the cablepack 14 is attached.

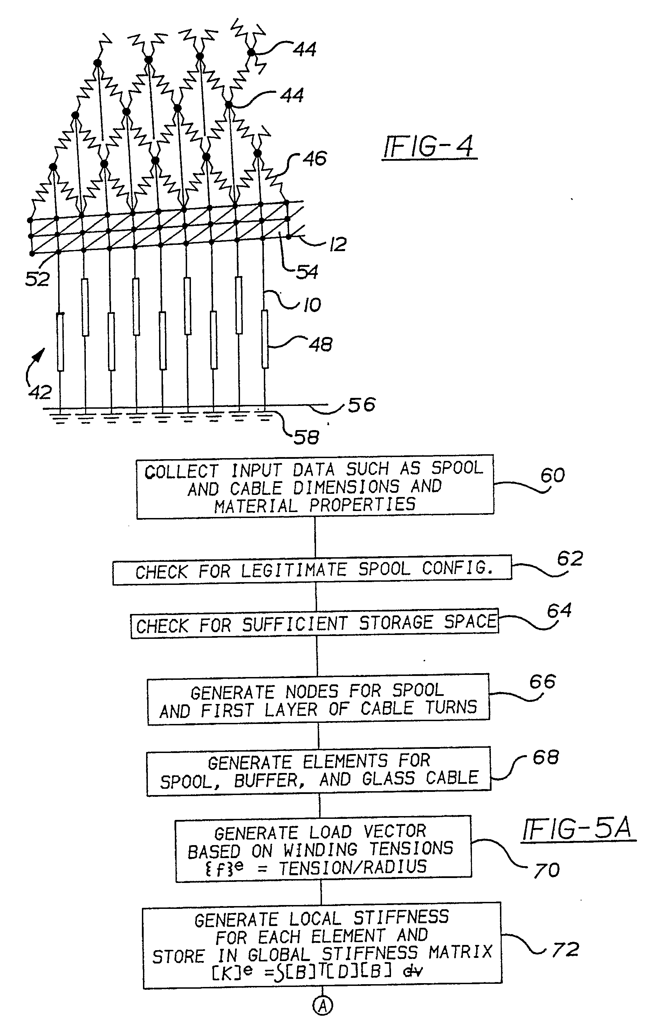

The cable 10 must be wound around the spool 12 in such a way as to enable the cable 10 to dispense from the spool 12 at a very rapid rate and, therefore, with as little drag and friction between each turn of the cable 10 as possible. FIG. 2 shows a partial view of one end of a cablepack 14. Typically, a spool 12 is hollow for reasons such as material cost and weight reduction. The first layer of cable 10 wound around the spool 12, called a baselayer 18, may be contained on the ends by a lip 22. As successive layers 24 of the cable 10 are wound around the spool 12 each layer is stepped back a predetermined number of turns. The stepback regions are shown in FIG. 2 as a 3 1/2 turn stepback 26 for layers three, four, and five and a 1/2 turn stepback 28 for layer two. Only five partial layers 24 are shown for clarity. In FIG. 3 the stepback regions 30 are shown looking down on the cablepack 14. The first turn of each layer is shown as it steps back a predetermined number of turns from each adjacent lower layer.

The spool 12 may also be slightly tapered to form a conical shape which enhances rapid payout. Once a certain number of layers 24 have been formed on the spool 12, the last layer or outermost layer, will be stepped back many turns from either end 32, 34 of the spool 12. The region between each end of the last layer of cable 10 is called the axially uniform region 36 of the cablepack 14. The two end regions 38, 40 of the cablepack 14 defined by the physical ends of the spool 12 and the beginning of the last layer of cable 10 represent the end-to-end transition regions also known as the stepback regions of the cablepack 14, as shown in FIG. 1.

Up to this point, the information provided in this detailed description of the invention, has been set forth to provide a background for the subject invention. The present invention provides an apparatus and method for predicting certain mechanical characteristics and displacements relating to the cablepack 14, which may then be used to improve the cablepack 14. It should also be recognized that, although this invention was developed with improved missile guidance in mind, the invention may also be used to develop or improve windings of any elongated article wound around a spool of various materials, dimensions, and axisymmetric shapes.

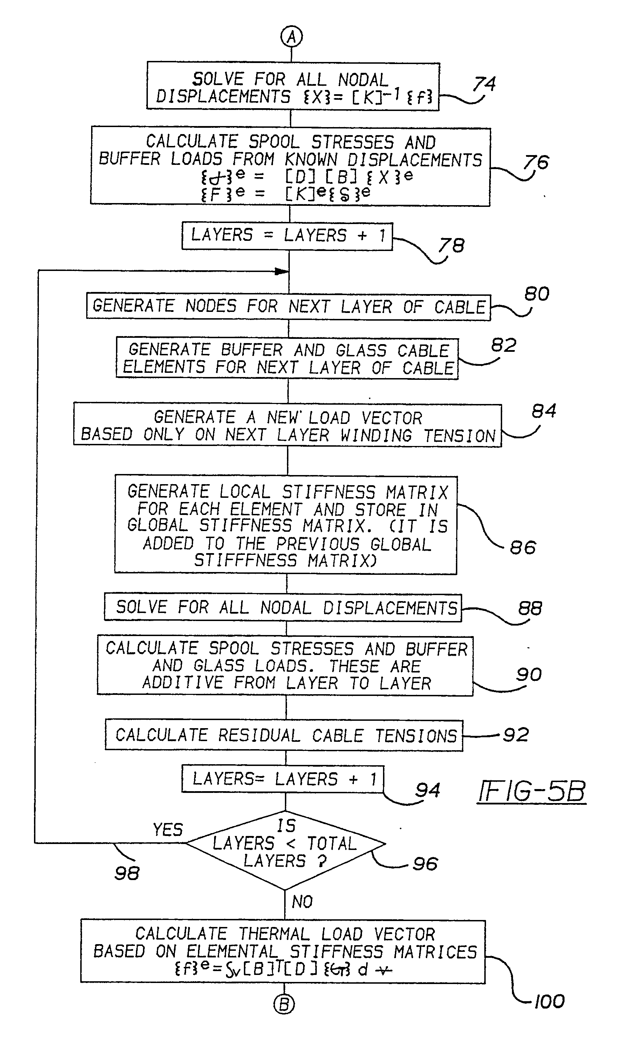

The present invention incorporates finite element modeling techniques to develop a computer finite element analysis program which models a cablepack 14 and is capable of predicting mechanical characteristics such as spool stresses, cable loads, cable displacements, and residual cable tensions. FIG. 4 shows a portion of the model 42 of the cablepack 14. The entire model for the cablepack 14 has not been shown for sake of clarity. Each cable 10 turn is represented by a node 44. Each node 44 is connected by an element which is the buffer transverse stiffness 46 that accounts for the interaction between adjacent cable 10 turns and between the base layer 18 of cable 10 turns and the spool 12. The buffer transverse stiffness 46 is a laboratory measured value derived from the inverse of the average slope of a plot of cable 10 load (a combination of transverse loads applied to the cable) versus cable 10 diametric deflection. Each individual cable hoop stiffness 48 is derived from Equation 1 and in this case is assuming a glass fiber optic cable.

Equation 1: $K_{glass} = E_{glass} * A_{glass} / (4 * R^2)$

K represents the glass element hoop stiffness 48. E represents the modulus of elasticity for the glass cable 10. A designates the cross-sectional area of the glass cable 10. R designates the spool 12 average outside radius.

The spool 12 may be modeled by axisymmetric finite elements which may have an anisotropic (orthotropic) material response that allows for modeling composite spool 12 materials. The spool nodes 52 and elements 54 are shown in FIG. 4 on a slightly tapered, conical shaped spool 12. The axial centerline 56 of the spool 12 is also the location for the nodes 58 which represent ground.

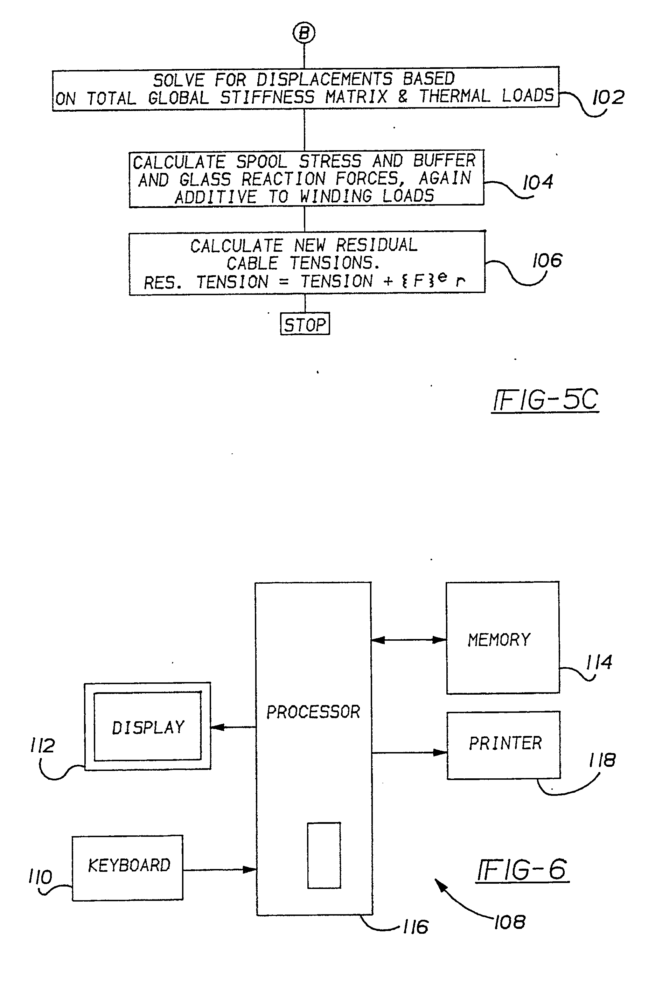

FIGS. 5A, 5B, and 5C comprise steps in the program for accomplishing the objectives. The program functions in a way very similar to that in which a cablepack is wound, i.e., layer-by-layer. The first step 60 is collection of input data such as the spool 12 and cable 10 dimensions and material properties. The necessary model input parameters include the spool 12 and buffer 46 material and geometric properties as well as the number of baselayer 18 turns, number of layers of cable 10, and the number of stepbacks. This data is then inputted into a storage device 114 of the computer 108 for later use (see FIG. 6). A check is made for legitimate spool 12 configuration (step 62) and sufficient storage space (step 64). The program first sets out the nodes 44, 52 for the spool 12 and first layer of cable 10 turns (step 66). Next, the elements 54, 46, 48 are generated (step 68) for the spool, buffer, and cable. Next, a load vector is generated (step 70) based on the prescribed winding tensions in the cable 10. The units for this load vector are expressed per radial length of cable. The program then calculates the connectivity for each element and generates a global stiffness matrix (step 72) by use of the following equation:

Equation 2: $[K]^e = \int [B]^T[D][B]\, dV$

The variables of Equations 2-7 are listed in a chart later in this specification.

A banded equation solver based on Gaussian elimination is then used to compute all the nodal displacements (step 74) using the equation set forth below.

Equation 3: $\{X\} = [K]^{-1}\{F\}$

From these computed displacements, buffer interface loads and spool stresses may now be calculated (step 76) using the following equations.

Equation 4: $\{F\}^e = [K]^e\{\delta\}^e$

Equation 5: $\{\sigma\}^e = [D][D][B]\{X\}^e$

The program now adds one layer (step 78) to the model and again nodes are generated (step 80) for the next layer of cable 10, and elements are generated (step 82) for the buffer and cable 10 of the next layer of cable 10. A new load vector is generated (step 84) based only on the next layer winding tension. A new local stiffness matrix is generated (step 86) for each element and stored in the global stiffness matrix (it is added to the previous global stiffness matrix). Once again, all nodal displacements are computed (step 88) and from these nodal displacements, a new set of buffer interface loads, cable loads, and spool stresses are computed (step 90), as well as the residual cable tension (step 92). These are additive from layer-to-layer. A new layer is then added (step 94) and the program checks if the previous layer was the final layer (step 96) and, if not, the same procedure is repeated (step 98) until all layers have been modeled. This results in the residual tension not only as a function of the number of layers, but also through the layer-to-layer transition regions.

A thermal load vector is then calculated (step 100) based on elemental stiffness matrices using the following equation:

Equation 6: $\{f\}^e = \int_V [B]^T [D] \{\epsilon_T\}\, dV$

Now the program solves for displacements (step 102) based on the total global stiffness matrix and the thermal loads. These displacements are now used to generate (step 104) buffer and cable reaction forces and spool stresses which are additive to the winding loads. Finally, the program calculates (step 106) the new residual cable tensions, making use of the following equation:

Equation 7: Res. Tension = Winding Tension + $\{F\}^e * r$

Being able to predict the aforementioned output (i.e.: spool stresses and cable tensions) based on the number of turns, layers, stepbacks, initial tensions, temperature, spool configuration and other mentioned input data variables, enables cablepack design to be optimized without the cost of destructive testing. More efficient cablepack design enhances rapid payout of the cable from the spool, and results in a more dense and compact winding arrangement.

Now referring to FIG. 6 there is shown a computer hardware system 108 for carrying out the objectives of this invention. Presently, it is thought that the best mode for operating this program is a digital computer or a similar computer which can handle this type of program. The computer system preferably includes a keyboard 110 (such as a Tektronix Terminal -TEK4105) for inputing data, a display tube 112 (such as the TEK4105) for visually verifying the data, a memory storage unit 114 for storing the data until it is used by the program, a data processor unit 116 (such as a VAX 11/785) for performing the calculations and a printer 118 (such as a Digital 100 letter printer) for printing out a hard copy of the results. A graphic preprocessor, which prepares the input data, may be interfaced with the program to visually assist in the input and design of the nodes and elements of the cablepack. Similarly, a graphic post processor may be used to enhance the understanding of the analysis by visually displaying the changes in displacement and deflections occurring in the cablepack. The preprocessor and post processor units are not shown. Node renumbering schemes or bandwidth minimizers will allow for analyzing larger models.

It is thought that the computer system of the present invention and its attendant advantages will be understood from the foregoing description and it will be apparent that various changes may be made in the form and construction of the parts and steps thereof, without departing from the spirit and scope of the invention or sacrificing all of its advantages, the forms herein before described being merely preferred or exemplary embodiments thereof.

Variables of Equations 2-7

$[K]^e$ represents the element stiffness matrix.

$[B]^T$ represents the transposed strain-displacement matrix.

$[D]$ represents the elasticity matrix which relates the strains to stresses for an orthotropic material response.

[B] represents the strain-displacement matrix.

V represents volume.

(X) represents the resulting system displacement column vector.

{F} represents the applied loading column vector.

{F}$^e$ represents buffer interface element loads and cable reaction loads, column vector.

{δ} represents the element displacements column vector.

{σ} represents average stress at the centroid of each spool element.

{X}$^e$ represents the elements resulting displacement column vector.

{f}$^e$ represents the elements thermal load vector.

{$\epsilon_T$} represents the thermal strain column vector arrived at by multiplying the spool coefficient of thermal expansion in each direction by the change in temperature.

r represents the radius of a cable cross-section.

## Claims

1. A computer system for predicting physical responses of a cable and spool, said cable being wound around said spool, said system comprising:
means for inputting first data relating to said cable and said spool;
means for inputting second data relating to stepback regions of said cable wound around said spool;
means for storing said first data and said second data; and
means for defining and storing mathematical interrelationships relating to said first data and said second data;
means for generating said predicted physical responses from said mathematical relationships.

2. The system of Claim 1, further comprising means for inputting third data relating to a conical shape for said spool.

3. The system of Claim 1, further comprising means for inputting fourth data relating to an anisotropic material for said spool.

4. The system of Claim 1, further comprising means for inputting fifth data relating to a uniform temperature change in said cable and said spool.

5. A method of operating a computer to generate output relating to physical responses of a cable wound around a spool, said method comprising the steps of:
inputting first data relating to said cable and said spool;
inputting second data relating to stepback regions of said cable wound on said spool;
storing said first data and said second data;
defining interrelationships of said first data and said second data; calculating said physical responses from said first data, said second data and said interrelationships; and
generating said output.

6. The method of Claim 5, further comprising inputting third data relating to a conical shaped said spool.

7. The method of Claim 5, further comprising inputting fourth data relating to an anisotropic material for said spool.

8. The method of Claim 5, further comprising inputting fifth data relating to a uniform temperature change in said cable and said spool.

9. An apparatus including a computer programmed to incorporate finite element techniques for generating mechanical characteristics and displacements of cable precision wound around a spool, comprising:
means for inputting known data relating to said cable and said spool;
means for inputting data representing nodes for said spool and a first layer of said cable wound around said spool;
means for inputting data representing elements for said spool, said cable and buffers;
means for inputting a load vector based on winding tensions;
means for generating a local stiffness for each said element and storing said local stiffness in a global matrix;
means for calculating displacements for said nodes;
means for calculating stresses for said spool and loads for said buffer and said cable from said displacements;
means for calculating a thermal load vector relating to said spool and said cable; and
means for calculating residual tensions in said cable.

10. A method of operating a computer using finite element analysis to generate output such as mechanical properties and displacements of a cable wound around a spool, said method comprising the steps of:
inputting known data such as said spool dimensions and material properties;
generating nodes for said spool and said first layer of cable wound around said spool;
generating elements for said spool, buffers, and said cable;
generating a load vector based on winding tensions;
generating a local stiffness for each said element and storing said stiffness in a global matrix;
calculating nodal displacements;

calculating said spool stresses and said buffer and said cable loads from said displacements;

generating said nodes for a next layer of said cable wound around said spool;

generating said buffer and said cable elements for said next layer of said cable;

generating a new load vector based on said next layer winding tension;

generating a new local stiffness matrix for said elements and storing in said global matrix;

calculating new nodal displacements;

calculating new said spool stresses and said buffer and said cable loads;

calculating residual tensions in said cable;

calculating a thermal load vector relating to said cable and said spool;

calculating said displacements based on total said global matrix and said thermal loads;

calculating said spool stress and said buffer and said cable loads additive to previous said stresses and said loads;

calculating new residual tensions in said cable; and printing said output.

11. A computer system for predicting mechanical characteristics and displacements of a cable wound around a spool for use in guiding a missile, said system comprising:

means for inputting known first data of said cable and said spool;

means for inputting second data for stepback regions of said cable wound around said spool;

means for storing said first data and said second data;

means for defining interrelationships of said first data and said second data; and

means for calculating said mechanical characteristics and displacements, from said first data, said second data and said interrelationships.

12. A method of operating a computer to predict mechanical properties and displacements of a cable wound around a spool to form a cablepack, said cablepack used in the guidance of a missile, said method comprising the steps of:

inputting known first data of said cable and said spool;

inputting second data for stepback regions of said cable wound on said spool;

storing said first data and said second data;

defining interrelationships of said first data and said second data;

storing said interrelationships;

calculating said mechanical characteristics and displacements from said first data, said second data and said interrelationships; and

generating said output.

13. A test procedure wherein a computer is used to generate mechanical properties and displacements of a cable wound around a spool, to form a cablepack, said cablepack used in the guidance of a missile, said procedure comprising the steps of:

inputting known first data relating to said cable and said spool;

inputting second data relating to stepback regions of said cable wound on said spool;

storing said first data and said second data;

defining interrelationships relating to said first data and said second data;

storing said interrelationships;

calculating said mechanical characteristics and displacements using said first data, said second data and said interrelationships; and

generating said output.

14. A method of operating a digital computer using finite element analysis to predict mechanical characteristics and displacements of cable wound around a spool, said method comprising the steps of:

collecting input data relating to said cable and said spool;

checking for a legitimate configuration of said spool;

checking for sufficient storage in a global stiffness matrix;

inputting connectivity of said spool;

inputting a first layer of said cable, buffer connectivity, properties of said spool, properties of said buffer, cable connectivity, properties of said cable, and radial loads due to tension in said cable;

inputting a next layer of said cable;

calculating a maximum band width;

calculating a local and said global stiffness matrix for said elements;

storing said element stiffness matrix in a system global stiffness matrix;

calculating thermal loads;

calculating a displacement vector;

developing an input data subroutine;

developing a buffer element stiffness matrix subroutine;

developing a spring element stiffness matrix subroutine;

developing an axisymmetric spool element subroutine;

storing said element stiffness matrices in said system global stiffness matrix;

developing a subroutine to develop a maximum band width;

developing a subroutine to solve a system of linear equations;

developing a subroutine for determining stresses of said cable and said buffer;

developing a subroutine to print output; and

developing a subroutine to print stresses of said spool; and

instructing said computer to use said subroutines to generate said output.

FIG-1

FIG-2

FIG-3

_IFIG-4_

COLLECT INPUT DATA SUCH AS SPOOL
AND CABLE DIMENSIONS AND
MATERIAL PROPERTIES — 60

CHECK FOR LEGITIMATE SPOOL CONFIG. — 62

CHECK FOR SUFFICIENT STORAGE SPACE — 64

GENERATE NODES FOR SPOOL
AND FIRST LAYER OF CABLE TURNS — 66

GENERATE ELEMENTS FOR
SPOOL, BUFFER, AND GLASS CABLE — 68

GENERATE LOAD VECTOR
BASED ON WINDING TENSIONS
$\{f\}^e$ = TENSION/RADIUS — 70

_IFIG-5A_

GENERATE LOCAL STIFFNESS
FOR EACH ELEMENT AND
STORE IN GLOBAL STIFFNESS MATRIX
$[K]^e = \int [B]^T [D][B] \, dv$ — 72

Ⓐ

Ⓐ

```
SOLVE FOR ALL NODAL
DISPLACEMENTS {X}= [K]⁻¹ {f}          74
```

```
CALCULATE SPOOL STRESSES AND
BUFFER LOADS FROM KNOWN DISPLACEMENTS     76
{σ}ᵉ =  [D] [B] {X}ᵉ
{F}ᵉ =  [K]ᵉ{S}ᵉ
```

```
LAYERS = LAYERS + 1          78
```

```
GENERATE NODES FOR NEXT LAYER OF CABLE     80
```

```
GENERATE BUFFER AND GLASS CABLE     82
ELEMENTS FOR NEXT LAYER OF CABLE
```

```
GENERATE A NEW LOAD VECTOR          84
BASED ONLY ON NEXT LAYER WINDING TENSION
```

```
GENERATE LOCAL STIFFNESS MATRIX
FOR EACH ELEMENT AND STORE IN
GLOBAL STIFFNESS MATRIX. (IT IS
ADDED TO THE PREVIOUS GLOBAL       86
STIFFFNESS MATRIX)
```

```
SOLVE FOR ALL NODAL DISPLACEMENTS     88
```

```
CALCULATE SPOOL STRESSES AND BUFFER
AND GLASS LOADS. THESE ARE
ADDITIVE FROM LAYER TO LAYER       90
```

```
CALCULATE RESIDUAL CABLE TENSIONS     92
```

```
LAYERS= LAYERS + 1          94
```

*FIG-5B*

YES ◇ IS
LAYERS < TOTAL
LAYERS ?          96

98

NO

```
CALCULATE THERMAL LOAD VECTOR
BASED ON ELEMENTAL STIFFNESS MATRICES
{f}ᵉ=∫ᵥ[B]ᵀ[D]{α}dv          100
```

Ⓑ

10

Ⓑ

SOLVE FOR DISPLACEMENTS BASED
ON TOTAL GLOBAL STIFFNESS MATRIX & THERMAL LOADS ⟋ 102

CALCULATE SPOOL STRESS AND BUFFER
AND GLASS REACTION FORCES, AGAIN
ADDITIVE TO WINDING LOADS ⟋ 104

CALCULATE NEW RESIDUAL
CABLE TENSIONS.
RES. TENSION = TENSION + $\{F\}^e \, r$ ⟋ 106

STOP

$FIG-5C$

MEMORY ⟋ 114

PROCESSOR

DISPLAY
112

PRINTER
118

KEYBOARD
110

116

$FIG-6$

108